# EUROPEAN PATENT APPLICATION

(11) **EP 0 845 915 A2**
(43) Date of publication of application: **03.06.1998**
(21) Application number: 97120633.9
(22) Date of filing: 25.11.1997
(51) Int. Cl.: H04Q 7/34, H04B 17/00

(54) **Apparatus for testing base stations and mobile terminals of personal communications systems**

(30) Priority: 27.11.1996 IT TO960957
(71) Applicant: TELECOM ITALIA S.p.A., 10122 Torino (IT)
(72) Inventor: Bessone, Danilo, 10057 S. Ambrogio di Torino (IT); Fiorina, Elio, 10141 Torino (IT); Perino, Massimo, 10020 Cambiano, (Torino) (IT)
(74) Representative: Riederer Freiherr von Paar zu Schönau, Anton

(57) **Abstract**

An apparatus (EM) is described for testing base stations (RFP1 ... RFPh) and mobile terminals (TM1 ... TMk) of personal communications systems, including DECT systems, whose base stations (RFP1 ... RFPh) provide mobile terminals (TM1 ... TMk) with radio access to a telecommunications network. The apparatus (EM) is an autonomous structure able to emulate a switching exchange featuring radio access and it can be constructed in portable form for conducting field tests. An internal control device (MP) contains the programs required for carrying out functional and traffic tests and tests of interworking with the mobile terminals and presents an operating system which creates the processes required by the tests, manages them for conducting the tests on a plurality of simultaneous communications and manages the information flow among the processes for displaying on and storing into an external control unit (PC) information about the execution of the tests.

## Description

The present invention relates to personal communications systems, and in particular its object is to provide an apparatus for testing base stations and mobile terminals of such systems.

Preferably, the invention is employed to conduct tests on the Radio Fixed Part (RFP) and on the mobile terminals of a DECT (Digital European Cordless Telecommunications) system, i. e. a system based on the homonymous European standard, and the description which follows shall be made with particular reference to this preferred application.

As is well known, the DECT system is a system for radio access to telecommunications networks and is destined to allow communications with mobile terminals in areas with high traffic density. In a system of this kind the mobile terminals (portable radio transceivers) communicate with a base station, connected in turn to a public or private network tasked with a certain number of functions, such as switching. Each base station controls an area (cell) of limited size, for instance with a radius of a few hundred meters, and therefore the system is of particular interest for communications in an urban environment or even indoors, e. g. to provide a communications system for a company (cordless PABX, cordless Local Area Network etc.). The essential characteristics and some possible applications of the DECT system are described for example in the papers "The New DECT Standard for Cordless Communications", by H. van der Hoek, Telecommunications, February 1993, pp. 77 ff., "DECT - Cordless Functionality in New Generation Alcatel PABX's", by V. Werbus *et al*., Electrical Communications, 2^{nd} Quarter 1993, pp. 172 ff., as well as in ETSI standards.

During testing and validation or qualification of the base stations and of the mobile terminals (i. e. when checking the apparatus for compliance with the operator's specifications), functional tests, traffic tests and interworking tests with the mobile terminals shall have to be performed.

Amongst functional tests, the following can be mentioned:
- telecommunications tests, i. e. tests on the handling of incoming and outgoing calls;
- tests on mobility management functions, such as registration of the terminal or user position, paging etc.;
- tests on security management functions, such as authentication of the terminal, of the user or of the network, encryption, etc.;
- tests on activation of the physical carrier for connection to the base station;
- tests on base station operation and maintenance, such as tests on set up, operating state management, loading of updated software configurations, statistics, measurements;
- tests on call transfer (handover) between two base stations or inside the same cell.

Traffic tests are normally telecommunications and mobility management functional tests, but performed on multiple calls simultaneously.

Lastly, tests of interworking with mobile terminals are aimed at verifying that a base station properly co-operates with terminals by different manufacturers and are based on the telecommunications and the mobility and security management functional tests performed on the base station.

Apparatuses for conducting such tests on base stations of the GSM mobile telephony system are already known in the art. However, these apparatuses cannot be used for tests on a personal communications system such as the DECT system, owing to the different nature of the two systems (DECT system is a system providing radio access to a telecommunications network, whereas GSM system is a complete network) and to the diversity of the standards governing them and of the protocols according to which they operate. For this reason it is also inconceivable to transform the procedures according to which the tests are to be conducted so that the known apparatuses can be used for the DECT system as well.

According to the present invention, an apparatus specifically conceived for conducting tests on the radio fixed part and on the mobile terminaIs of a DECT or similar radio access system is instead provided. The invention can be constructed in portable form, for performing field tests; it allows monitoring the results, with event tracing, storage on file and printing capabilities; it is highly flexible, both to allow tests on non standardised functions and/or on apparatuses by different manufacturers and/or according to specifications by different operators, and to provide for the possibility of introducing new types of tests.

The apparatus according to the invention, arranged to emulate a switching exchange featuring radio access, comprises:
- first interface and management devices, for connecting the test apparatus to a plurality of base stations and terminals of a telecommunications network and for managing the respective connections;
- switching devices connected to said first interface and management devices, for switching test communications coming from the base stations or directed thereto;
- second interface and management devices, for connecting the apparatus to an external control device and for managing that connection;
- an internal control device that: presents a bus to which means that in the first interface and management devices are tasked with managing the connections between the apparatus and the base stations and the network terminals, the switching devices and the second interface and management devices are connected; stores the programs required for conducting functional tests, traffic tests and tests of interworking with the mobile terminals; and presents an operating system which creates the processes required by the tests, manages them for conducting the tests on a plurality of simultaneous communications and manages the information flow among the processes for the display on and the storage into the external control device of information about the development of the tests;
- the external control device, which provides the internal control device with information about the specific type of base station and/or terminal connected to the apparatus and with test parameters, programs the test modes and supervises the execution of the tests.

For additional clarification, reference is made to the enclosed drawings, in which:
- Figure 1 is a general block diagram of an apparatus for performing tests on a base station and on mobile terminals of a DECT system;
- Figure 2 is a block diagram of the emulator of a switching exchange featuring DECT radio access;
- Figure 3 is a diagram of the levels of a protocol for communication between the emulator and the base stations and the terminals, provided by way of example;
- Figures 4A - 4B constitute, together, a flow chart of the operations of the operating system of the emulator;
- Figure 5 is a state diagram of a generic process;
- Figures 6 and 7 are SDL diagrams of two processes.

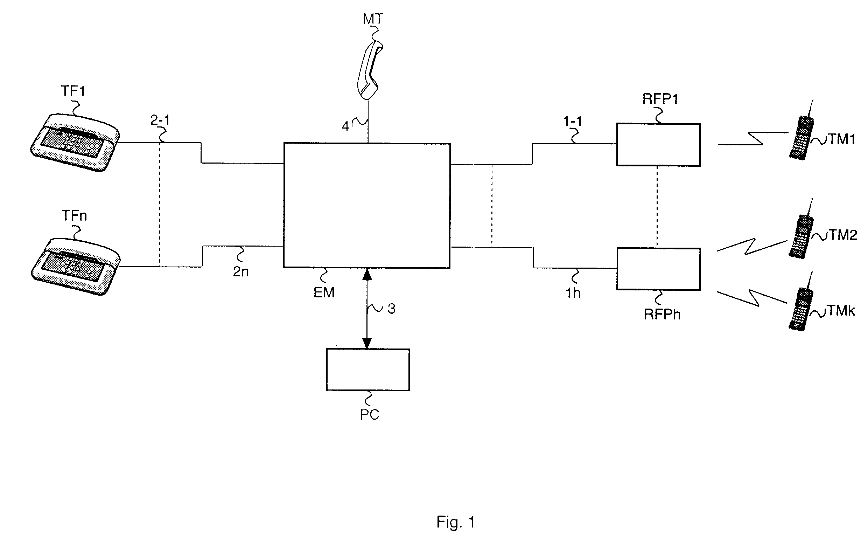

In Figure 1, references RFP1 ... RFPh indicate a group of base stations of a personal communications system (specifically a DECT system), which serve a certain number of mobile terminals TM1 ... TMk. The base stations RFP1 ... RFPh can be connected through respective lines 1-1 ... 1h to a unit EM (hereafter called emulator) which emulates a switching exchange featuring DECT radio access, i. e. a unit capable of establishing the connections between the mobile terminals and the users of a telecommunications network to which the base stations are connected. By way of non-limiting example, an embodiment of the emulator EM shall be described below for the case in which the switching exchange to be emulated is a switching exchange of an ISDN network, and therefore EM shall be connected, through lines 2-1 ... 2n, to a certain number of ISDN terminals TF1 ... TFn (hereinafter referred to also as 'telephones'). The connection of multiple base stations to the emulator EM allows performing tests on inter-cell handover.

The emulator EM is also associated with a personal computer PC or equivalent device for controlling the emulator, monitoring test execution and storing the results for subsequent off-line processing. Obviously, if the apparatus is destined to perform field tests, the computer PC should be a portable computer. Through the personal computer, an operator shall be able to configure the parameters for the specific test to be performed, the execution procedures (complete or step by step test), the test monitoring procedures. For monitoring, the emulator could also be connected to a local monitor. The connection with the personal computer PC or other device occurs via a serial line 3. The emulator EM can also be equipped with a handset MT, which represents a user of the telecommunications network and which, in the case of portable apparatus, can be more conveniently handled than telephones TF1 ... TFn. In this case the program of the personal computer PC shall be such as to emulate the telephone keyboard. The handset MT can be used in any case in addition to the ISDN telephones TF1 ... TFn.

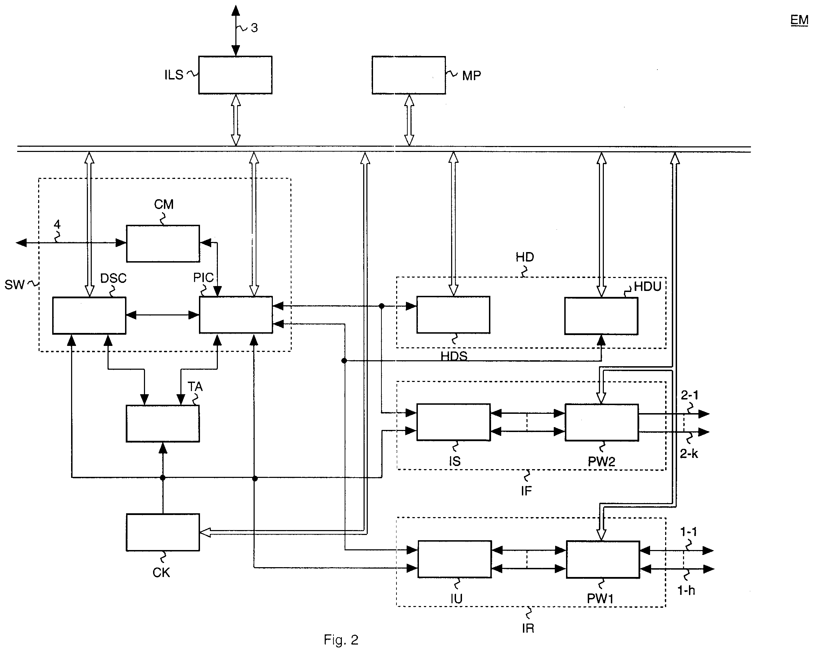

The emulator EM constitutes the subject matter of the invention and it shall be described in greater detail with reference to Figure 2.

Therein it can be seen that the emulator EM functionally comprises:
- devices, indicated in their entirety as IR, interfacing the emulator with the base stations RFP1 ... RFPh;
- devices, indicated in their entirety as IF, interfacing the emulator with the ISDN terminals TF1 ... TFm;
- devices ILS for managing the connection with the personal computer PC;
- devices HD for managing the connection between the emulator EM on one side and the base stations and the ISDN terminals on the other, through the interfaces IR, IF;
- devices TA for voice transcoding;
- devices SW for voice switching and for managing the buses connecting the devices themselves with the interfaces IR, IF;
- devices CK for generating timing signals for devices SW, TA, IR and IF;
- a microprocessor MP, to whose bus are connected the devices SW, HD, ILS, CK, IF and IR.

In an embodiment considered by way of example, the devices IR and IF comprise U and S ISDN interfaces, indicated respectively as IU, IS, which manage the physical level of the communication protocol, and devices for remote power supply and line protection PW1 (for the connection lines with the radio stations) and PW2 (for the connection lines with the ISDN terminals). The level 2 of the protocol is managed by the devices HD, which comprise a group of HDLC (High-level Data Link Control) controllers. In the drawing, the block HD has been shown subdivided into the two parts HDU, HDS destined to control signalling towards the base stations RFP and the telephones TF, respectively. The interfaces IU and IS and the HDLC controllers are devices well known in the art and their detailed description is not necessary here.

In particular, in this embodiment, the emulator EM has been equipped with four interfaces IU and eight interfaces IS, each requiring a controller HDU, HDS. The components PEB2091 and PEB2081 produced by Siemens were used as interfaces IU, IS respectively, and components PEB2075, also by Siemens, were used as controllers HDU, HDS, each component including four controllers.

In the specific case of the component indicated above, each interface IU is able to manage four full-duplex channels (i. e. four bi-directional calls), conveyed onto a single output telephone loop, and it presents four output loops: of these, one or two can be used for transporting the aforesaid channels, according to the needs of the base stations; the same loop(s) is (are) used, together with the other ones, for remote power supply. As a consequence, the interfaces IU allow connecting the emulator to two base stations able to manage eight channels each and to four base stations each managing four channels. The eight interfaces IS instead allow connection to an equal number of telephones TF1 ... TFm, so that tip to eight active channels can be considered in traffic tests. With four interfaces IU as stated above it will also be possible to conduct tests for handover from a base station to another.

The interfaces IU, IS are connected to the controllers HDU, HDS and to dialogue control devices (which shall be described farther on) present in SW. The connection is accomplished by means of respective buses which, in the hypothesis of using as interfaces IS, IU the aforesaid components, constitute interfaces known with the acronym IOM-2. The aforesaid buses comprise a pair of data lines (respectively for reception and transmission) and two lines for the synchronisation signals. The transmission, which is essentially similar to a PCM transmission, is organised in 125 µs frames and each channel of the IOM-2 frame comprises 32 bits related to:
- two 64 kbit/s channels, named channels B1 and B2, one of which, depending on the programming performed by the operator, is dedicated to voice;
- a monitor channel utilised to transfer programming information between the functional block performing the functions of the level 1 of the protocol (interfaces IS, IU) and the level 2 controller (blocks HDS, HDU);
- a 16 kbit/s signalling channel (channel D);
- four "command/indication" bits to manage level 1 functions (activation/deactivation and possible checks) by the level 2 controller (HDU or HDS);
- two bits, MR and MX, utilised to manage the monitoring channel.

The remote power supply devices PW1, PW2 comprise a power supply unit for each of the telephones TF and of the radio stations RFP, with output current/power characteristics which depend on the particular station being tested and on the type of network to which the radio stations provide access. These devices are wholly conventional and the person skilled in the art has no problem in choosing the best suited power supply unit for the type of network and station involved in the test. The devices PW1, PW2 also comprise a digital interface (in practice a register) through which the individual power supply units can be enabled/disabled by means of the program according to the configuration required by the specific test, determined by the operator.

The audio transcoding devices TA must provide for the conversion of the audio signals from the 64 kbit/s PCM format, required by the ISDN specifications, into the 32 kbit/s ADPCM format used in the DECT part, and vice versa. Devices which perform these functions are commercially available. In the described embodiment, circuits MC1453532 by Motorola have been used.

The switching devices SW must perform the actual switching function (block DSC) in addition to controlling the buses providing connection with the interfaces IS, IU (block PIC). Although the drawing shows two distinct blocks to indicate the dual function, single components able to perform both functions are commercially available. An example is the circuit PEB2055 by Siemens. The inputs/outputs of the devices SW are also connected to the audio transcoding devices TA.

The devices SW can comprise an additional unit (incorporated for the sake of drawing simplicity into the block DSC) destined to combine voice signals pertaining to several communications when the system being tested provides for the conference service. A device with these functions is also commercially available in the form of an integrated circuit (for example the component PEB2445 by Siemens).

If the handset MT is provided, it is connected, via its cord 4, to an appropriate connector CM connected to the block PIC through a PCM line.

The devices CK are tasked with generating and controlling the synchronisation and timing signals required for the operation of the devices SW, TA, IF, IR, ILS, and they obtain such signals either from an internal oscillator or from an external generator. The requirements of the individual devices are described in the data sheets of the components they comprise, to which reference can be made. CK is also tasked with checking for the presence of the synchronism signal of the IOM-2 bus (by generating an interrupt towards MP in case of malfunction), with generating an interrupt each multi-frame of the interface IU (12 ms) to allow the transmission, by the programme, of appropriate synchronism signals to the base stations, and lastly with checking the correct operation of the programme itself by means of a watch-dog check.

The devices ILS for managing the connection with the personal computer PC (Figure 1) or other peripheral unit comprise a conventional serial RS232 interface to which in the preferred embodiment two bi-directional channels are connected. ILS can be for instance component SAB82532 by Siemens.

Lastly the microprocessor MP, which contains the programmes required for conducting the tests, is a conventional commercial microprocessor, for instance the microprocessor 89C186XL by Intel.

The emulator EM described above is physically constructed by means of six printed circuit boards in the format known as "double Europe" (220x233 mm), besides the two boards which constitute the front and rear panels of a rack on which the six aforesaid boards are mounted. In particular, the following arrangement is provided:
- one board for the interfaces IS and one for the interfaces IU;
- one board for the devices for remote power supply to the telephones TF and one for those of the radio stations RFP;
- one board for the microprocessor MP, the switching devices SW, the controllers HDU, HDS and the interface ILS;
- one board for the timing devices CK and the audio transcoding devices TA.

Thus it can immediately be seen that the need to have a portable structure is fully met.

For the sake of simplicity, the drawings do not show the devices for supplying electrical power to the apparatus.

A novel feature of the present invention is the operating system mounted on the microprocessor MP. This operating system allows managing concurrent parallel processes, as well as managing the information flow among the processes themselves for its display and storage on the personal computer PC: this allows for an analysis of the correctness of the information exchange. The operating system adopted allows obtaining good performance in real time and makes it possible to record the calls to the different functions for implementing the SDL state diagrams (primitives transmission/reception, time count start/stop, etc.).

For ease of understanding of the description that follows, it is deemed appropriate to provide the following definitions:
- process: it is a part of programme which implements certain functions (or entities) provided by the DECT protocol (e. g. call control, mobility management, exchange of messages between protocol levels) or by the other communication protocols;
- SDL diagram: it is the graphic representation of a process; SDL (Specification and Description Language) is a standard way of describing the operation of a telecommunications system;
- primitive: it is the instrument used to exchange information between protocol entities of different hierarchical levels; in this regard, it should be remembered that the messages (which concern the communication between homologous levels of the fixed portion and of the mobile portion of the system) are actually dispatched by means of primitives which propagate from the level of origin to the physical level and then go up, in the receiving portion, from the physical level to the destination level.

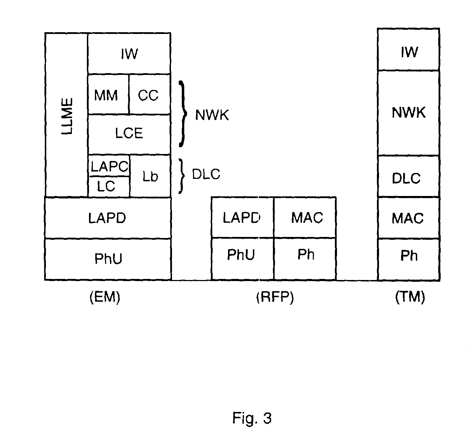

Figure 3 shows, for the sake of description clarity, a possible structure of the communication protocols between the emulator and the different devices connected thereto. These protocols are well known and the functions they perform (and thus the processes implemented in the emulator) do not require a more detailed description than the one provided farther on. That description will also provide an explanation of the acronyms appearing in the drawing, which also are well known to the technician.

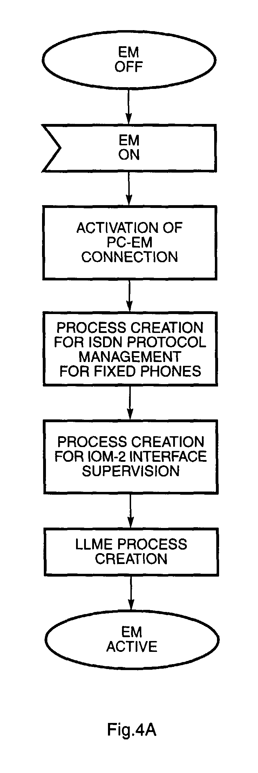

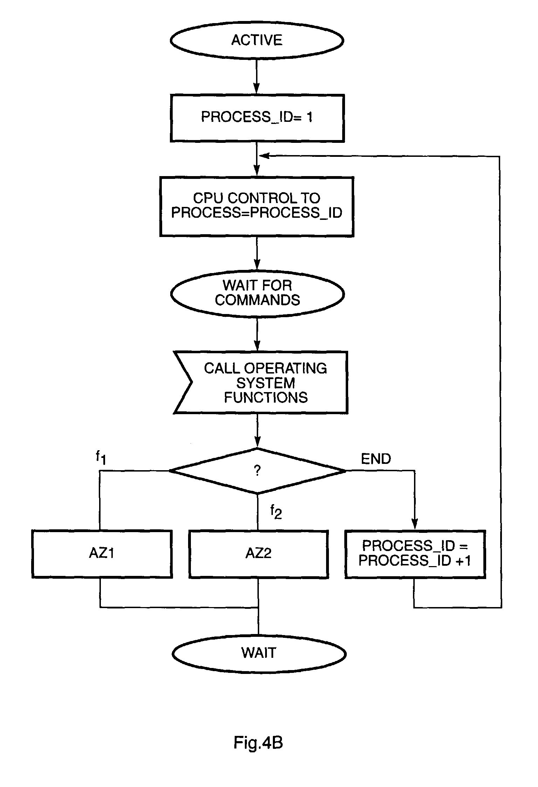

Figures 4A, 4B show a flowchart of the overall operations of the emulator.

The first operation the operating system performs upon starting the device is the activation of the RS232 serial connection between PC and EM, i. e. the creation of the data transmission and reception processes on the connection itself.

Subsequently the operating system creates the processes pertaining to the management of the level 2 and 3 protocols of the connections with the ISDN telephones, of the process for the IOM-2 interface supervision and of the LLME (Lower Level Management Entity) process, which in turn shall create the other processes pertaining to the DECT protocol. The creation of these processes is managed by the function "Main" which, as the name says, is the main function of the system. At this point the emulator is in its active state.

Upon its creation, a process is assigned a memory amount sufficient to contain the stack area, the global variables and a "local" memory area mainly utilised to house the queue of primitives awaiting processing. The maximum dimensions of these areas are specified at the moment the function tasked with creating the processes ("Create Task" function) is called up. Note that the operating system allows the creation of only those processes whose main characteristics (address of the corresponding function, stack dimensions, etc.) are stored in a data base residing on an EPROM memory. To create a process of a type not yet foreseen, it is therefore necessary to modify the operating system itself as well.

All the processes created are inserted into a list (queue) which is cyclically read by the operating system. A process being examined (for instance the first one, as indicated by PROCESS_ID = 1 in the diagram shown in the Figures 4A, 4B) obtains control of the CPU of internal controller MP if the process itself is not suspended and if it has at least one primitive queued thereto. Once the process has obtained the control, the process shall call up the operating system functions indicated by the commands received (f1, f2 ...), and shall carry out the required actions (AZ1, AZ2 ...). Control then returns to the operating system for examining the next process. The procedure adopted for all processes therefore is the following:
1) When the process obtains control of the CPU, the first primitive is immediately read from the queue ("Wait Message" function). If the queue is empty, the "Wait Message" function immediately returns control of the CPU to the operating system and the process shall obtain control again only when at least one primitive is queued to it.
2) The primitive is then analysed.
3) Once the actions required by the message contained in the primitive have been accomplished, if no additional processing is required the primitive is eliminated from the queue ("Free Message" function). If instead subsequent processing is required, the primitive is inserted into an appropriate list ("Save Message" function). The primitives present in this list shall be reinserted into the main queue at the moment the SDL state changes.
4) The process surrenders control of the CPU to the operating system ("Scheduler" function). Note that in order to guarantee a reasonable sharing of the processing times among the various processes, the criterion selected is to analyse a single primitive at a time for each process: in the absence of the call-up to the "Scheduler" function, the process would take place regularly but it would maintain control of the CPU until the complete clearing of the queue of primitives: should these be numerous, the other processes would remain inactive for a period whose duration could be excessive.

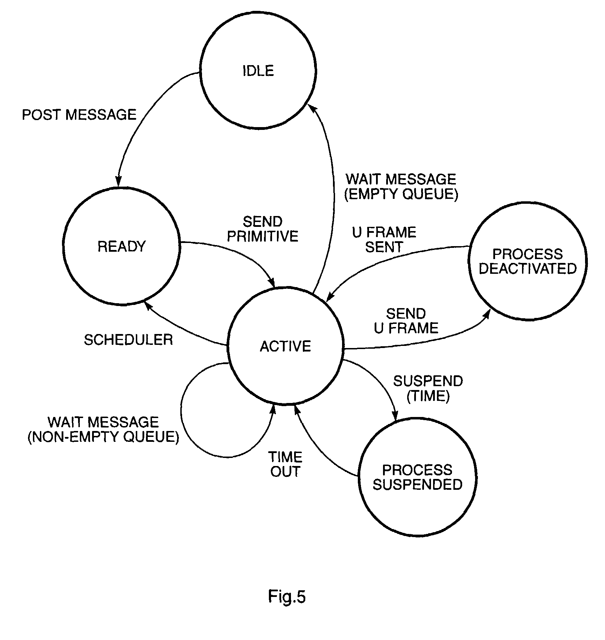

The general procedure described above is also shown in the state diagram of Figure 5.

The IDLE state is maintained by the process in the absence of queued primitives whilst the READY state is reached as soon as the process itself receives at least one primitive that pertains to it ("Post Message" function) so that it is able to obtain control of the CPU at the appropriate moment. The ACTIVE state is the one in which the process has obtained control of the CPU: the diagram clearly shows the return to the READY state and to the IDLE state after the analysis of each primitive ("Scheduler" function) and respectively when the primitive queue has been cleared ("Wait Message").

Two additional states, which can be reached from the ACTIVE state, are provided for. The first one is a PROCESS SUSPENDED state, wherein the process remains for a time which is indicated in the message that caused the suspension itself: once the time has elapsed, the process returns to the ACTIVE state. The presence of this state allows dispensing with dedicating CPU time to a process which needs to be called up only sporadically or which is in a phase followed by a period of inactivity of the process itself. The second one is a PROCESS DEACTIVATED state, which is reached for instance because a certain action is required (for instance transmission of an HDLC frame) by the controllers HD1, HD2 (Figure 2). The system returns to the ACTIVE state also from this state, once the controller involved has performed the required operation.

The operating system also provides a support to the management of the SDL states in order to make it possible to record state changes. To this end, the functions "Set State", which changes the state, and "Get State", which allows reading the current state, are provided.

As was seen with regard to the suspension, during the execution of the various processes, counting of the time elapsing between two events or of the time elapsed after the occurrence of an event may be required: to this end, timers integrated in the component embodying MP are used and the operating system includes functions ("Set Timer"; "Kill Timer") for starting and respectively stopping such counting.

Through the user interface (implemented on the personal computer PC, Figure 1, e. g. in WINDOWS® environment) it is possible to programme the operating system in such a way as to record the calls to the functions related to the management of the processes, of the primitives, of the time counts. The data are stored into a RAM area known as "tracing buffer memory" which can be read at the operator's request. In this case the content of this memory is transferred, via a serial connection, to PC where it is decoded and subsequently displayed on a video screen (in the form of an SDL diagram). However, it should be kept in mind that activation of the event recording entails an inevitable degradation in the real-time performance of the programme.

A list of the functions of the operating system, adopted to implement the SDL state diagrams, is reported below; providing some additional details:

### A) Create Task

As stated above, this is the function creating a process; when this function is called up, the operating system must provide as parameters a first pointer (lpszTask) which identifies the string containing the name of the process type (for instance "LLME"), and a second pointer (lplms) which allows access to information defining the structure and the maximum dimensions of the memory area reserved for the process indicated by lpszTask. Note that multiple "instances" can be created for each type of process, since the tests to be performed can concern multiple events of the same kind (the simplest example is that multiple simultaneous calls can be in progress). The function provides the operating system with a value 0 if its outcome is negative (for instance the name of the process is unknown or the required memory is not available), otherwise the value provided is the identity of the process created.

### B) Destroy Task

When this function is called up, the operating system must provide as a parameter the identity (idTask) of the process whose destruction is required. Note that a process may request its own destruction. This function replies with a value 1 if the process indicated by idTask has been destroyed. Otherwise (for example if the process does not exist) the value provided is 0.

### C) Post Message

This function relates to the exchange of messages between processes. Taking into account that, as stated, the exchange of messages takes place through the transmittal of primitives, the parameters required for the execution of this function are:
- idDest, which is the identity of the process to which a primitive is sent (i. e. queued in the list awaiting processing);
- idPrim, which is the name of the primitive to be transmitted, and npParam, which is the pointer to a memory area containing the parameters associated to the primitive identified by idPrim. Note that the pointer must address a memory area actually assigned to the process which has called up the function;
- lpMess, which is the pointer to the message conveyed by the primitive. If its value is NULL, then the primitive has no message.
The value returned is 0 if it was not possible to queue the primitive to the destination process (for example idDest specifies a non-existing process).

### D) Wait Message

This function retrieves the first primitive awaiting processing queued to the process. As stated, if this function is called up when the queue is empty, then the control of the CPU returns to the operating system. The function provides the operating system with the pointer relevant to the primitive read (its value can never be NULL).

### E) Free Message

This function extracts the first primitive from the queue of primitives awaiting processing associated to the calling process (i. e. the one holding control of the CPU), freeing the resources assigned to this primitive and deleting its information content. Generally, this function is called up at the completion of the analysis of the primitive. The "Free Message" function returns no value to the operating system.

### F) Save Message

This function extracts the first primitive from the list of primitives awaiting processing associated to the calling process and queues it to a list which shall in turn be inserted again at the head of the queue of primitives awaiting processing when the "Restore All Messages" function is called up or when the SDL state of the process is modified through the "Set State" function. This function also returns no value to the operating system.

### G) Restore All Messages

This function inserts again at the head of the queue of primitives awaiting processing by the calling process the primitives previously extracted through the "Save Message" function. The "Restore All Messages" function returns no value.

### H) Set Timer

This function activates the time countings; it requires the following parameters:
- nTimer, which gives the identity of the virtual timer whose activation is required;
- nDelay, which indicates how many tune units must elapse before expiration of the time set;
- nClock, which indicates the duration of a time unit: for example, 1 millisecond, 10 milliseconds or 1 second can be used as nClock values.
The value provided to the operating system by this function is the identity of the timer activated, if the outcome is positive. Otherwise the function yields a value 0 (corresponding to an invalid timer identity). Upon expiration of the time set by nDelay and nClock, a primitive TIME_OUT is queued to the calling process. The parameters associated with this primitive include also the identity of the timer activated by this function.

### I) Kill Timer

This function is opposite to the previous one and causes stopping the count by the timer whose identity idTimer is provided by a previous call-up to the "Set Timer" function. The "Kill Timer" function at the end always provides a value 0 in order to invalidate the variable containing the identity of the stopped timer.

### L) Set State

This function causes the calling process to pass to a state indicated by a parameter nStateSDL. Obviously, the function performs no operation if the process is already in this state. In case of a state change, the primitives which may have been extracted by a previous call-up to the "Save Message" function are inserted again at the head of the queue of primitives awaiting processing.

### M) Get State, Get Current Task, Get Parent

These functions provide the operating system respectively with the value of the SDL state the calling process is in, the calling process identity and the identity of the process which has created the calling process. In regard to the last function, if the calling process has been created by the operating system during the programme initialisation phase (such as the processes for managing the connection with the personal computer) or by the "Main" function (such as the LLME process), the value returned is 0.

### N) L-Alloc

This function allocates a memory area, destined for the storage of a number of bytes, specified by a nDim parameter, within the area assigned to the calling process. The dimensions of that area were in turn specified at the time the process was created. This area is in turn subdivided into lists of blocks of different dimensions (for example 6 lists of blocks with dimensions from 16 to 512 bytes): the function initiates the search for a free memory block starting from the list of available blocks having the minimum dimensions required in order to contain nDim bytes and, if the list is found empty, the function continues the search among the list of blocks with immediately larger dimensions. The value returned is the pointer to the memory area allocated, or 0 (NULL) if memory allocation cannot be performed.

The DECT processes implemented by the emulator in the course of a test related to the specific DECT system considered by way of example shall now be reviewed, providing some details.

### RX RS232 Process

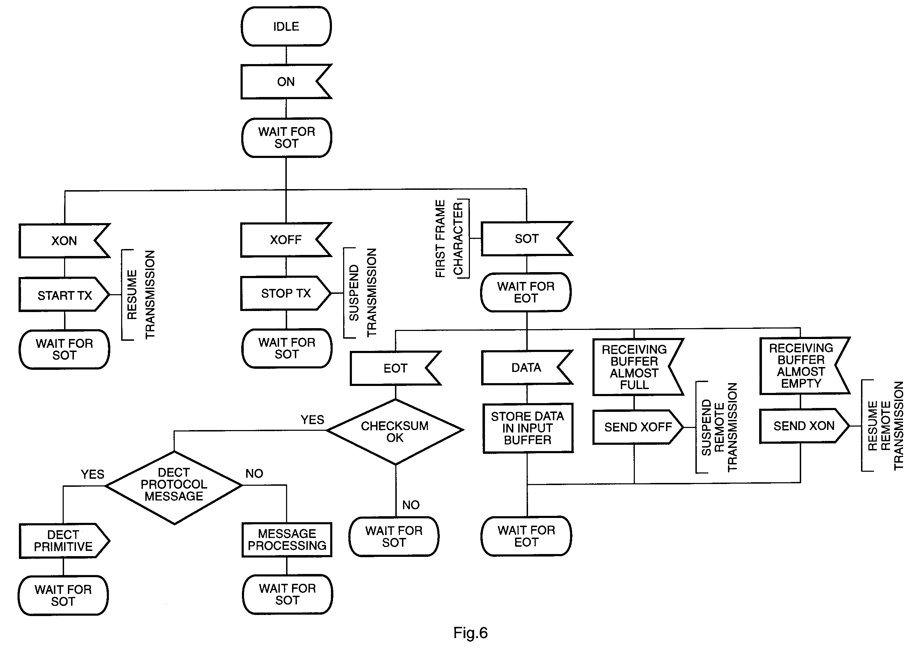

This process, created automatically by the operating system upon the programme activation, manages the reception of data from the personal computer PC (Figure 2). Through a memory area updated by the driver managing the interface ILS, Figure 2, the process detects the presence of data and immediately activates their processing. The latter consists in recognising the start of a message (SOT character) and then in storing all the information content until the reception of the end of message character EOT. If the modulo-256 sum of these data (checksum) has a pre-set value (in particular, zero), the message received is considered valid; otherwise, the message is discarded. The type of each message is determined according to the coding of the first character of the data area. The process then verifies whether the function of the message received actually pertains to the execution of the tests and, if it does, a primitive with the information received is created and transmitted towards the process involved (the message type allows identifying univocally the destination process). If instead the data received pertain to functions such as event recording or to the general operating parameters of the machine, the process immediately provides for their processing. Therefore, this is the process which performs most of the operations the operator activates through PC (Figure 2). The operations relating to this process are also shown in the diagram in Figure 6. The diagram is self-explanatory and requires no specific comments. Note that, in addition to what has been stated above, the diagram also indicates the emission and reception of the commands for suspending and resuming a transmission (XOFF, XON characters) which commands can be exchanged between EM and PC when one of the two units is not able or respectively is again able to receive additional data (typical example, the reception buffer is nearly full).

### TX RS232 Process

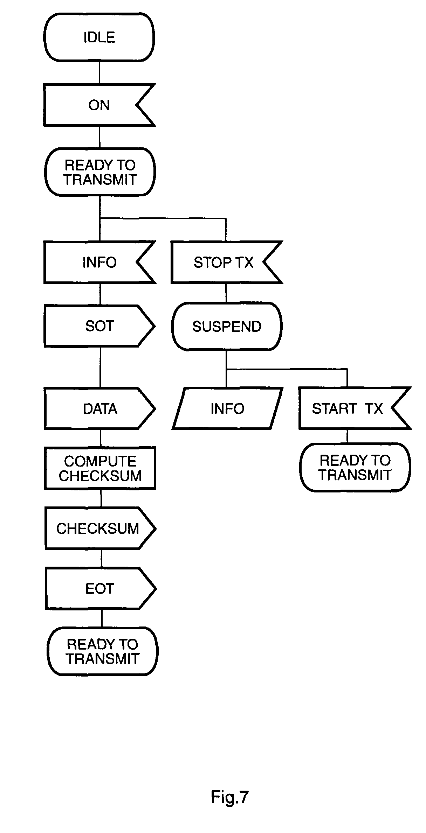

This process is created (together with RX_RS232) at the end of the programme initialisation procedure. It manages the transmission of the messages on the line 3. Such transmission is activated by writing the information to be transmitted (DATA), preceded by the SOT character and followed by EOT, into a data area shared with the driver of the interface ILS. The character that precedes EOT is set to such a value that the sum of the data has the pre-set value. The operations related to this process are also shown in the diagram in Figure 7. The diagram is self-explanatory and requires no particular comments.

### LAPD U Process.

This process manages all level 2 (Channel D access control procedures or LAPD, Link Access Procedure - D) and level 1 (physical level) functions related to the connection of the emulator with the radio station being tested. Level 2 is wholly in compliance with ITU-T recommendation Q.921, and the main parameters (time count duration, transmission window dimension, etc.) can be set by the operator. Level 1 manages the procedure for the activation and control of the U interface according to ETSI standard DTR/TM-3002, to which reference is made for a detailed description since the operations carried out by the emulator to implement this process are wholly in accordance with the standard itself. The programme creates four instances of this process so that all four U interfaces can be managed simultaneously.

### LAPD S Process

This process manages the level 2 and level 1 procedures of the connection with the ISDN telephones used to test the radio station concerned. Level 2 is in compliance with ITU-T recommendation Q.921 mentioned above, whilst level 1 manages the activation and control of the S interface as provided for by ITU-T recommendation I.430. Since all operations performed by the emulator to implement this process are fully in accordance with the recommendations mentioned, reference is made thereto for a detailed description. The programme creates eight instances of the process in order to be able to simultaneously manage all eight S interfaces available.

### L3 S Process

This process manages the level 3 procedures of the ISDN telephones in accordance with ITU-T recommendation Q.931, to which reference is made for a detailed description. Note however that only those functions which allow managing a call have been implemented, the other functions not being of interest in the application envisaged for the invention. Eight instances of this process are also created, in order to simultaneously manage all eight available S interfaces.

### DELAY Process

This process is used only for the purpose of checking the programme and it inserts a delay in the transmission of a primitive. In practice the process which originates the primitive does not send it directly to the addressee but queues it to this process, which stores the primitive and forwards it to the addressee only upon expiration of a time interval specified as a parameter associated to the primitive itself.

### IOM-2 Process

This process manages the transmission on the monitoring channel of the two IOM-2 interfaces. This channel is used by the levels 1 of the S and U interfaces to send service information to and receive service information from the respective peripheral units. This operation (which could be performed directly by the levels 1) is entrusted to this process for the sole purpose of improving the real time performance of the programme.

### O&M (Operation and Maintenance) Process

This process is tasked with the activation, initialisation, remote power supply and start-up of the base station or stations being tested. The procedures according to which these operations are performed are specific for the type of station and they vary from one manufacturer to another. The operator managing the test shall have to load them into the system.

### INTERWORKING UNIT (IWU) Process

This process manages all procedures allowing interworking between the level 3 processes relating to the DECT radio interface and those relating to the ISDN interface, by keeping the data base containing the information about the different calls updated. Interworking procedures too are defined by the respective standards, to which reference is made.

### CALL CONTROL (CC) Process

This process manages level 3 procedures (network level, indicated as NWK in Figure 3) which allow setting up, maintaining and releasing circuit-switched services, and it provides a support for all signalling related to a call. Each instance of this process is associated to a connection service of the User plane (plane U) managed by the LLME process.

### MOBILITY MANAGEMENT (MM) Process

This process manages all level 3 procedures necessary to guarantee security in the provision of DECT services. These procedures become necessary due to the mobile nature of the DECT user and they are also used to prevent the illegal connection to the radio interface. The procedures carried out are subdivided as follows:
- Authentication procedures, i. e. the procedures used in both the mobile and the fixed part to verify the correctness of the identity received;
- Registration procedures, i. e. the procedures used by a mobile unit, for instance when the terminal is switched on, to indicate to the fixed part its position in terms of localisation area and to inform the fixed part of its availability to receive and make calls;
- Subscription procedures, i. e. the procedures used by a mobile terminal to obtain access rights to a fixed part;
- Cryptography procedures.
These procedures too are obviously wholly in accordance with the provisions of the DECT standard, to which reference is made for more details.

### LINK CONTROL ENTITY (LCE) Process

This process manages all level 3 procedures necessary for setting up, managing and releasing a DLC (Data Link Control) connection of plane C (control plane) between fixed and mobile parts by coordinating the use of DLC level resources, including management of the broadcast services.

### DATA LINK CONTROL (DLC) Processes

These processes manage all level 2+ (DLC) procedures capable of creating and maintaining in a reliable manner the DLC connections of plane C between the fixed and mobile part. Their purpose is to generate more reliable connections by providing a higher degree of data integrity at level 3, by making use of MAC (Medium Access Control) connections wherein a part of the errors of the radio transmission have already been removed. For plane U, the process provides the transparent transmission used for voice connections at 32 kbit/s and allows the handover. In particular, this process allows providing two independent services:
- point-to-point connection service accomplished by the LAPC and Lc processes;
- broadcast service accomplished by the Lb process.

LAPC Process
   This process realises a level 2 protocol derived from the ISDN LAPD protocol and it can manage the transport of information with and without acknowledgement, perform the segmentation and re-composition of packets of the NWK level, as well as control their flow and sequence.
Lc Process
   This process stores the LAPC packets and divides them into fragments of suitable size for the MAC level (and vice versa), recognises transmission errors on the complete LAPC packet, manages handover control, allocates the transmission resources provided by the MAC level and revokes their allocation according to the requests arriving from entities at the NWK level.
Lb Process
   This process manages a broadcast service which allows mainly the transmission of paging information.

### LOWER LAYER MANAGEMENT ENTITY (LLME) Process

The task of this process is, as previously stated, to create all other processes related to the DECT protocol and therefore it performs all coordination and control activities involving processes at different levels (NWK, DLC and MAC) by maintaining a data base containing information on the various process instances which are created/removed updated. It also provides a translation of the primitives coming from the LAPD processes into the corresponding MAC primitives which are used by the DLC level DECT processes (and vice versa).

The execution of a test with the apparatus described shall now be reviewed in a more detailed way.

Through the personal computer PC (Figure 1), the operator activates first the serial connection with the emulator EM by setting the parameters of that connection (bit rate, type of parity, stop bits, etc.) and then, if necessary, he/she reloads the programme of the microprocessor MP (Figure 2).

In the subsequent step, the connections with the terminals TF1 ... TFn and the base stations RFP1 ... RFPh are activated. Alternatively or in addition to the connection with the terminals, the connection with the handset MT can be activated. In case of connection to the ISDN terminals, the operator can programme the channel of the ISDN frame to be used for voice and can associate appropriate indicators to each terminal. For connection to the base stations, the operator shall have to programme the overall number of loops for connection to the network and the number of voice channels the station can handle at the same time (e. g. 2 or 4 loops and 4 or 8 channels); additionally, according to the type of station, the operator shall set up the allocation of the loops to power supply and voice. In this phase, the operator will be able to reload the respective programme into the base stations (the transfer takes place in two phases, first from PC to EM and then from EM to RFP); thus, the remote loading of the programmes themselves is also tested. The test management programmes allow, as stated, the individual activation and deactivation of the devices connected to the emulator and thus the test configuration adopted can be varied at will according to the specific requirements (e. g. test on a single call or on multiple simultaneous calls).

During the activation of the connection with the radio stations, the operator may specify additional parameters, including system parameters (e. g. the identity of the system, the Radio Path Number and other parameters which the system has to broadcast periodically to all mobile terminals, in accordance with the provisions of the standard), parameters more directly connected to the test equipment (programme loading modes, location of the files pertaining to the programme of the radio station, etc.), and parameters relating to the radio station, such as the maintenance parameters (for example, coding of the station alarms and states) and radio parameters (maximum and minimum power thresholds, interference situation on the channels, etc.).

At this point the radio station can actually be activated for the test, which in the most general case consists of the execution of one or more calls: in fact, during a call, all the operating system processes and functions seen above are involved. It will be possible to test communications between mobile and fixed terminals or among mobile terminals, controlled by the same base station or by different base stations, if multiple base station are connected to the emulator. In the latter case, the conditions corresponding to the passage of a mobile terminal from one cell to another can also be simulated during the test. During the test set-up, the operator may specify whether the communication is to take place in clear or is to be encrypted. Moreover, an automatic test procedure may be selected, wherein all envisaged operations are performed by the apparatus in a pre-set sequence, or a step by step procedure may be selected, wherein the operator indicates the step to be performed and obtains an acknowledgement from the apparatus each time. In the most general case, the automatic procedure will be chosen, unless the operator desires a check of individual operations or of a specific part of the test (e. g. authentication, recording ...). Moreover, the operator shall programme the monitoring modes and shall specify the type of information to be obtained: in particular, display can take place in the form of SDL diagrams or arrow diagrams, with time indications of the events which took place, and information can be obtained on the protocol entities involved, on the content of the messages etc. The collected data can then be stored in a file.

It is evident that what has been described is provided solely by way of non limiting example and that variations and modifications are possible without thereby departing from the scope of the invention. Thus, for example, the interfaces towards the ISDN network and the base stations can differ from the U and S ISDN interfaces mentioned above. Additionally, since the DECT system can allow radio access to networks other than the ISDN network, such as conventional telephone networks, packet switching networks, local area networks, mobile communications networks etc., which require other communications protocols than the ISDN protocol, the interfaces IS can be replaced by specific interfaces for the terminals of the different network types, for example interfaces operating according to the protocols set out by CCITT recommendation G703, with 32-channel frames and a gross bit rate of 2 Mbit/s. The replacement of the components indicated previously with others capable of operating with another type of protocol is anyway not a problem for the person skilled in the art, since specific commercial components exist for the different internationally standardised protocols.

## Claims

1. Apparatus for testing base stations (RFP1 ... RFPh) and mobile terminals (TM1 ... TMk) of personal communications systems of the type wherein the base stations (RFP1 ... RFPh) provide the mobile terminals (TM1 ... TMk) with radio access to a telecommunications network, characterised in that the apparatus itself constitutes an autonomous structure capable of emulating a switching exchange featuring radio access, and comprises:
- first interface and management devices (IR, IF; HD) for connecting the test apparatus (EM) to a plurality of the base stations (RFP1 ... RFPh) and of terminals (TF1 ... TFn) of the telecommunications network and for managing the respective connections;
- switching devices (SW), connected to said first interface and management devices (IR, IF, HD), for switching test communications coining from the personal communications system or directed thereto;
- second interface and management devices (ILS) for connecting the apparatus to an external control device (PC) and managing said connection;
- an internal control device (MP), presenting a bus connected to means (HD) that in the first interface and management devices are tasked with managing the connections between the apparatus and the base stations (RFP1 ... RFPh) and the network terminals (TF1 ... TFn), to the switching devices (SW), and to the second interface and management devices (ILS), and storing the programmes necessary for executing functional tests, traffic tests and tests of interworking with the mobile terminals and presenting an operating system which creates the processes required by the tests, manages them for the execution of the tests on a plurality of simultaneous communications and manages the information flow among the processes themselves for the display and storage into the external control device of information about the development of the tests;
- the external control device (PC), which provides the internal control device (MP) with information about the specific type of base station and/or terminal connected to the apparatus and with test parameters, programmes the test procedures and supervises the execution of the tests.

2. Apparatus as claimed in claim 1, characterised in that it also comprises devices (CK) for generating and controlling the synchronisation and timing of the operations of the apparatus and for checking the correct operation of the programmes of the internal control device (MP).

3. Apparatus as claimed in claim 1 or 2, characterised in that the first interface and management devices (IR, IF, HD) comprise, for the connection to the base stations (RFP1 ... RFPh) and to the terminals (TF1 ... TFn) of the telecommunications network:
- a radio interface (IR), comprising means (IU) for managing the physical level of the communication protocols required for access to the network, and means (PW1) for remote power supply of the base stations (RFP1 ... RFPh); and
- a network interface (IF), comprising means (IS) for managing the physical level of the communication protocols required for communication with the terminals (TF1 ... TFn) of the telecommunications network and means (PW2) for remote power supply of the terminals (TF1 ... TFn) of the telecommunications network;
the means (IU, IS) for managing the physical levels of the communication protocols in said interfaces (IR, IF) being associated to respective units (HDU, HDS) of the connection management devices (HD), destined to manage the signalling.

4. Apparatus as claimed in claim 3, characterised in that said interfaces (IR, IF) comprise one of said means (IU, IS) for managing the physical level of the protocol and one of said remote power supply means (PW1, PW2) for each of the base stations (RFP1 ... RFPh) and respectively of the network terminals (TF1 ... TFn) which can be connected to the apparatus, the physical level management and remote power supply means being able to be activated and deactivated individually by an operator, through the external control device (PC).

5. Apparatus as claimed in any of claims 1 to 4, characterised in that said switching devices (SW) also comprise means (PIC) for controlling connection lines between the devices themselves and the interfaces (IR, IF).

6. Apparatus as claimed in any of claims 1 to 5, characterised in that the switching devices (SW) also comprise means (DSC) for combining the voice signals relating to multiple communications for tests on base stations and mobile terminals of a personal communications system providing for a conference service.

7. Apparatus as claimed in any of claims 1 to 6, characterised in that said base stations (RFP1 ... RFPh) are the base stations of a system operating in accordance with the DECT standard.

8. Apparatus as claimed in any of claims 1 to 7, characterised in that said terminals (TF1 ... TFn) of the telecommunications network are ISDN terminals.

9. Apparatus as claimed in any of the previous claims, characterised in that it also comprises devices (TA) associated with the switching devices (SW), for voice trans-coding from the format used in the personal communications system into the one required by the terminals (TF1 ... TFn) of the telecommunications network, and vice versa.

10. Apparatus as claimed in any of the previous claims, characterised in that the constituent devices are integrated circuit components which can be mounted on a limited number of printed circuit boards, for the embodiment of the apparatus itself in the form of a portable apparatus for field tests.

11. Apparatus as claimed in claim 10, characterised in that it also comprises means (CM) for connecting the switching devices (SW) to a handset (MT), whose dialling devices are simulated on the external control device (PC).

12. Apparatus as claimed in claim 11, characterised in that the connection between the handset (MT) and the apparatus (EM) can be activated by the external control device (PC) in alternative or in addition to the connections with the network terminals (TF1 ... TFn).

13. Apparatus as claimed in any of the previous claims, characterised in that said operating system, when the apparatus is started, acts so as to:
- create data transmission and reception processes on the connection between the apparatus and the external control device;
- create processes related to the management of levels 2 and 3 of the communication protocols pertaining to the connections with the terminals (TF1 ... TFn) of the telecommunications network;
- create a process for supervising the communication between said radio and network interfaces (IR, IF) and the respective signalling management units (HDU, HDS);
- create a process (LLME) tasked with performing, within the personal communications system protocol, the co-ordination and control activities involving functions of different levels and, through this process, create the other processes relating to the functions provided by the communication system.

14. Apparatus as claimed in claim 13, characterised in that said operating system is capable of performing a cyclic reading of the identity of the processes created and of assigning control of the internal control device (MP) to a process which is not suspended and has actions to be performed, indicated by primitives queued in a memory area assigned to the process itself.

15. Apparatus as claimed in claim 14, characterised in that, for each primitive relating to a process, the following operations are performed:
a) reading the primitive from the queue when the process obtains control of the processing unit;
b) analysing the primitive:
c) carrying out the actions required by the message contained in the primitive;
d1) if subsequent processing of the primitive is not required, deleting the primitive from the queue;
d2) if subsequent processing of the primitive is required, inserting the primitive into a waiting list, and inserting it again into the main queue at the moment the process changes state.

16. Apparatus as claimed in claim 14 or 15, characterised in that, after handling a primitive relating to a process, said operating system is able to assign control of the processing unit to the next process having primitives to be handled.
